# EUROPEAN PATENT APPLICATION

(11) **EP 4 255 093 A1**
(43) Date of publication of application: **04.10.2023**
(21) Application number: 22182192.9
(22) Date of filing: 30.06.2022
(51) Int. Cl.: H04W 76/15

(54) **METHOD AND APPARATUS FOR CONTROLLING MULTI-LINK DEVICE TO TRANSMIT DATA, DEVICE AND STORAGE MEDIUM**

(30) Priority: 28.03.2022 CN 202210308432
(71) Applicant: Chengdu Xgimi Technology Co., Ltd, Chengdu, Sichuan 610041 (CN)
(72) Inventor: Wu, Hao, Chengdu, 610041 (CN); Wyin, Lei, Chengdu, 610041 (CN)
(74) Representative: Barker Brettell LLP

(57) **Abstract**

Disclosed are a method and apparatus for controlling a multi-link device to transmit data, a device and a storage medium. The method comprises: a first multi-link device transmitting a data packet to a second multi-link device via a first link, the data packet indicating that the second multi-link device is required to assist in transmitting data on a second link; receiving a first message which is for assisted transmission and is transmitted by the second multi-link device via the second link; transmitting a second message responding to the first message to the second multi-link device via the second link; and transmitting data via the second link within the transmission duration allocated to the first multi-link device on the second link.

## Description

### Technical Field

The present disclosure relates to the field of communications, and in particular, to a method and apparatus for controlling a multi-link device to transmit data, a device and a storage medium.

### Background

802.11be system, also known as an Extremely High Throughput (EHT) system, enhances functions by means of a series of system characteristics and multiple mechanisms, so as to achieve extremely high throughput. Along with the continuous increase of the use of wireless local area networks (WLANs), providing wireless data services in many environments (e.g. home, business, and hotspots) is becoming more and more important. In particular, video traffic will continue to be the dominant traffic type in many WLAN deployments. Due to the appearance of 4k and 8k videos (an uncompressed rate of 20 Gbps), the throughput requirements of these applications are continuously developing. Novel application programs having high throughput and low latency, such as virtual reality or augmented reality, game, remote offices and cloud computing, will proliferate (e.g. latency of real-time games is less than 5 milliseconds).

In view of the requirements for high throughput and strict real-time latency of these application programs, when application programs of a user are supported via a WLAN, the user expects higher throughput, higher reliability, less latency and jitter and higher power supply efficiency. The user desires to improve integration with a time sensitive network (TSN), to support application programs on a heterogeneous Ethernet and a wireless LAN. A 802.11 be network is intended to ensure the competitiveness of the WLAN by further improving the total throughput and reducing latency, while ensuring backward compatibility and coexistence with old-version technical standards.

### Summary

In a multi-link scenario, generally, one physical device may comprise a plurality of logic devices, each logic device can independently manage data transmitting and receiving, and each logic device independently works on one link. However, due to the considerations of device cost, energy consumption reduction, and volume, transceivers of some multi-link devices have poor anti-interference performance, and data transceiving between a plurality of links may form great interference, such that when a multi-link device transmits data on one link, other links cannot receive data, and these links are referred to as a non-simultaneous transmitting and receiving (NSTR) link set. In a case that the multi-link device is configured with a transceiver with higher performance, anti-interference capability of data transceiving between a plurality of links is very strong, and when data is transmitted on one link, data may also be received on the other links, and the data transceiving between two links do not affect each other, and these links are referred to as a simultaneous transmitting and receiving (STR) link set. When a multi-link device transmits data on one link in a non-simultaneous transmitting and receiving link set, for the other links, due to interference, whether the links are idle cannot be detected, and this phenomenon is referred to as media loss-of-synchronism. When media loss-of-synchronism occurs, the multi-link device cannot perform transmitting on the link on which the media loss-of-synchronism occurs because whether the link is idle cannot be determined, or the transmitting overlaps with the transmitting of other terminal devices due to detection error, thereby causing data transmitting failure. In view of this, embodiments of the present disclosure provide a method and apparatus for controlling a multi-link device to transmit data, a device and a storage medium.

In a first aspect, embodiments of the present disclosure provide a method for controlling a multi-link device to transmit data, which is applied to a first multi-link device, the first multi-link device being connected to a second multi-link device at least via a first link and a second link, wherein for the first multi-link device, the first link and the second link belong to an NSTR link set, and for the second multi-link device, the first link and the second link belong to an STR link set, and the method comprises:
a data packet is transmitted to the second multi-link device via the first link, the data packet indicating that the second multi-link device is required to assist in transmitting data on the second link;
a first message transmitted by the second multi-link device is received via the second link, wherein the first message is used for indicating assisted transmission, and the first message comprises a transmission duration allocated to the first multi-link device on the second link;
a second message is transmitted responding to the first message to the second multi-link device via the second link; and
data is transmitted via the second link within the transmission duration allocated to the first multi-link device on the second link.

In some embodiments, the first message further comprises an indication of a mode of assisted transmission, wherein the mode of assisted transmission comprises the following two modes: within the allocated transmission duration, data can only be transmitted to the second multi-link device; and within the allocated transmission duration, data can be transmitted to the second multi-link device or other devices.

The step of transmitting data via the second link within the transmission duration allocated to the first multi-link device on the second link comprises:
in a case that the first message indicates that data can only be transmitted to the second multi-link device within the allocated transmission duration, data is transmitted to the second multi-link device via the second link within the transmission duration allocated to the first multi-link device on the second link; and
in a case that the first message indicates that data can be transmitted to the second multi-link device or other devices within the allocated transmission duration, data is transmitted to the second multi-link device or other devices via the second link within the transmission duration allocated to the first multi-link device on the second link.

In some embodiments, the first message further comprises information of a device receiving the first message; and only when the information of the device receiving the first message comprises an identifier of the first multi-link device, a second message responding to the first message is transmitted to the second multi-link device via the second link.

In some embodiments, the first multi-link device is a terminal device, the second multi-link device is an access point, the first message is a trigger message, the trigger message comprises a trigger type, and the trigger type is set as assisted transmission.

In some embodiments, the first message further comprises an indication of a link for assisted transmission, and the link for assisted transmission indicated in the first message comprises the second link.

In some embodiments, the data packet also indicates that the second multi-link device is required to assist in transmitting data on a third link, the link indicating assisted transmission in the first message also comprises the third link; the first message further comprises a transmission duration allocated to the first multi-link device on the third link, and the transmission duration allocated to the first multi-link device on the third link is the same as the transmission duration allocated to the first multi-link device on the second link; or the two transmission durations indicate that the first multi-link device simultaneously stops transmitting on the third link and the second link, the third link is a link except the first link and the second link between the first multi-link device and the second multi-link device; wherein for the first multi-link device, the first link, the second link and the third link belong to an NSTR link set, and for the second multi-link device, the first link, the second link and the third link belong to an STR link set. The method further comprises:
a third message is transmitted responding to the first message to the second multi-link device via the third link; and
data is transmitted via the third link within the transmission duration allocated to the first multi-link device on the third link.

In some embodiments, the step of transmitting data via the third link within the transmission duration allocated to the first multi-link device on the third link comprises:
in a case that the first message indicates that data can only be transmitted to the second multi-link device within the allocated transmission duration, transmitting data to the second multi-link device via the third link within the transmission duration allocated to the first multi-link device on the third link; and
in a case that the first message indicates that data can be transmitted to the second multi-link device or other devices within the allocated transmission duration, data is transmitted to the second multi-link device or other devices via the third link within the transmission duration allocated to the first multi-link device on the third link.

In some embodiments, before receiving a first message transmitted by the second multi-link device via the second link, the method further comprises:
a fourth message transmitted by the second multi-link device via the second link is received, wherein the fourth message is used for requesting the size of data requiring to be transmitted by the first multi-link device on the second link; and
a fifth message responding to the fourth message is transmitted to the second multi-link device via the second link, wherein the fifth message comprises the size of data requiring to be transmitted by the first multi-link device on the second link, and instructing the second multi-link device to set, according to the size of the data requiring to be transmitted by the first multi-link device on the second link in the fifth message, a transmission duration allocated to the first multi-link device on the second link.

In a second aspect, some embodiments of the present disclosure provide a method for controlling a multi-link device to transmit data, which is applied to a second multi-link device, the second multi-link device being connected to a first multi-link device at least via a first link and a second link, wherein for the first multi-link device, the first link and the second link belong to an NSTR link set, and for the second multi-link device, the first link and the second link belong to an STR link set, and the method comprises:
a data packet transmitted by the first multi-link device via the first link is received, the data packet indicates that the second multi-link device is required to assist in transmitting data on the second link;
in a case that a transmission opportunity is obtained on the second link, transmitting a first message to the first multi-link device via the second link, wherein the first message is used for indicating assisted transmission, and the first message comprises a transmission duration allocated to the first multi-link device on the second link; and
a second message which responds to the first message and is transmitted by the first multi-link device via the second link is received.

In some embodiments, the first message further comprises an indication of a mode of assisted transmission, wherein the mode of assisted transmission comprises the following two modes: within the allocated transmission duration, data can only be transmitted to the second multi-link device; and within the allocated transmission duration, data can be transmitted to the second multi-link device or other devices.

Further, after receiving a second message which responds to the first message and is transmitted by the first multi-link device via the second link, the method further comprises:
in a case that the mode of assisted transmission indicated in the first message is that within the allocated transmission duration, data can only be transmitted to the second multi-link device, then within the transmission duration allocated to the first multi-link device on the second link, after an instant response message is transmitted via the second link or the data transmitted by the first multi-link device via the second link is received but instant response is not required, in a case that it is detected that the second link is idle, transmitting data to the first multi-link device or other devices via the second link; and
in a case that the mode of assisted transmission indicated in the first message is that within the allocated transmission duration, data can be transmitted to the second multi-link device or other devices, then only transmitting an instant response message to the first multi-link device via the second link within the transmission duration allocated to the first multi-link device on the second link.

In some embodiments, the first message further comprises information of a device receiving the first message, and the information of the device receiving the first message comprises an identifier of the first multi-link device.

In some embodiments, the first multi-link device is a terminal device, the second multi-link device is an access point, the first message is a trigger message, the trigger message comprises a trigger type, and the trigger type is set as assisted transmission.

In some embodiments, the first message further comprises an indication of a link for assisted transmission, and the link for assisted transmission indicated in the first message comprises the second link.

Further, the data packet also indicates that the second multi-link device is required to assist in transmitting data on a third link, and in a case that a transmission opportunity is obtained on the third link, the link for indicating assisted transmission in the first message also comprises the third link; the first message further comprises a transmission duration allocated to the first multi-link device on the third link, and the transmission duration allocated to the first multi-link device on the third link is the same as the transmission duration allocated to the first multi-link device on the second link; or the two transmission durations indicate that the first multi-link device simultaneously stops transmitting on the third link and the second link, the third link is a link except the first link and the second link between the first multi-link device and the second multi-link device; wherein for the first multi-link device, the first link, the second link and the third link belong to an NSTR link set, and for the second multi-link device, the first link, the second link and the third link belong to an STR link set. The method further comprises:
a third message which responds to the first message and is transmitted by the first multi-link device via the third link is received.

Still further, after receiving a third message which responds to the first message and is transmitted by the first multi-link device via the third link, the method further comprises:
in a case that the mode of assisted transmission indicated in the first message is that within the allocated transmission duration, data can only be transmitted to the second multi-link device, then within the transmission duration allocated to the first multi-link device on the third link, after an instant response message is transmitted via the third link or the data transmitted by the first multi-link device via the third link is received but instant response is not required, in a case that it is detected that the third link is idle, transmitting data to the first multi-link device or other devices via the third link; and
in a case that the mode of assisted transmission indicated in the first message is that within the allocated transmission duration, data can be transmitted to the second multi-link device or other devices, then only transmitting an instant response message to the first multi-link device via the third link within the transmission duration allocated to the first multi-link device on the third link.

In some embodiments, before transmitting a first message to the first multi-link device via the second link, the method further comprises:
a fourth message is transmitted to the first multi-link device via the second link, wherein the fourth message is used for requesting the size of data requiring to be transmitted by the first multi-link device on the second link;
a fifth message which responds to the fourth message and is transmitted by the first multi-link device via the second link is received, wherein the fifth message comprises the size of data requiring to be transmitted by the first multi-link device on the second link; and
a transmission duration allocated to the first multi-link device on the second link is set, according to the size of the data requiring to be transmitted by the first multi-link device on the second link in the fifth message,.

In a third aspect, some embodiments of the present disclosure provide an apparatus for controlling a multi-link device to transmit data, which is applied to a first multi-link device, the first multi-link device being connected to a second multi-link device at least via a first link and a second link, wherein for the first multi-link device, the first link and the second link belong to an NSTR link set, and for the second multi-link device, the first link and the second link belong to an STR link set, and the apparatus comprises: an assisted-transmission requesting component, the assisted-transmission requesting component being configured to execute the following steps:
transmitting a data packet to the second multi-link device via the first link, the data packet indicating that the second multi-link device is required to assist in transmitting data on the second link;
receiving a first message transmitted by the second multi-link device via the second link, wherein the first message is used for indicating assisted transmission, and the first message comprises a transmission duration allocated to the first multi-link device on the second link;
transmitting a second message responding to the first message to the second multi-link device via the second link; and
transmitting data via the second link within the transmission duration allocated to the first multi-link device on the second link.

In a fourth aspect, some embodiments of the present disclosure provide an apparatus for controlling a multi-link device to transmit data, which is applied to a second multi-link device, the second multi-link device being connected to a first multi-link device at least via a first link and a second link, wherein for the first multi-link device, the first link and the second link belong to an NSTR link set, and for the second multi-link device, the first link and the second link belong to an STR link set, and the apparatus comprises: an assisted-transmission component, the assisted-transmission component being configured to execute the following steps:
receiving a data packet transmitted by the first multi-link device via the first link, the data packet indicating that the second multi-link device is required to assist in transmitting data on the second link;
in a case that a transmission opportunity is obtained on the second link, transmitting a first message to the first multi-link device via the second link, wherein the first message is used for indicating assisted transmission, and the first message comprises a transmission duration allocated to the first multi-link device on the second link; and
receiving a second message which responds to the first message and is transmitted by the first multi-link device via the second link.

In a fifth aspect, embodiments of the present disclosure provide an electronic device, comprising a memory, a processor and a computer program stored in the memory, wherein the processor executes the computer program to implement the method of the first aspect or the second aspect.

In a sixth aspect, embodiments of the present disclosure provide a computer-readable storage medium, on which a computer program is stored, wherein when the computer program is executed by a processor, the method according to the first aspect or the second aspect is implemented.

According to a seventh aspect, embodiments of the present disclosure provide a computer program product, comprising instructions that, when executed by a processor, implement the method according to the first aspect or the second aspect.

It should be noted that the apparatus of the third aspect is used to implement the method of the first aspect, the apparatus of the fourth aspect is used to implement the method of the second aspect, and the electronic device of the fifth aspect, the storage medium of the sixth aspect and the computer program product of the seventh aspect are used to execute the method provided according to the first aspect or the second aspect, and therefore they can achieve the same beneficial effects as those of the method according to the first aspect or the second aspect, and details thereof will not be repeated in the embodiments of the present disclosure.

In some embodiments of the present disclosure, a multi-link device having a high-performance transceiver is used to assist in scheduling a multi-link device having a poor-performance transceiver to perform transmission on a link of media loss-of-synchronism, thereby avoiding waste of resources, effectively increasing the utilization of network resources, while reducing the data transmission error rate, and increasing the network transmission rate.

### Brief Description of the Drawings

Fig. 1 is a schematic diagram of an architecture of a communication system provided according to embodiments of the present disclosure;
Fig. 2 is a flowchart of a method for controlling a multi-link device to transmit data provided according to embodiments of the present disclosure;
Fig. 3 is a schematic diagram of an architecture of another communication system provided according to embodiments of the present disclosure;
Fig. 4 is a flowchart of another method for controlling a multi-link device to transmit data provided according to embodiments of the present disclosure;
Fig. 5 is a flowchart of still another method for controlling a multi-link device to transmit data provided according to embodiments of the present disclosure; and
Fig. 6 is a schematic structural diagram of an electronic device provided according to embodiments of the present disclosure.

### Detailed Description of the Embodiments

In order to make a person skilled in the art better understand the technical solutions of the present disclosure, hereinafter, the technical solutions in the embodiments of the present disclosure will be clearly and completely described. It is apparent that the embodiments described are not all embodiments but a part of embodiments of the present disclosure. It should be understood that the specific embodiments described herein are only used to explain the present disclosure, and are not intended to limit the present disclosure. Although the disclosure content in some embodiments of the present disclosure is introduced according to one or more exemplary embodiments, it should be understood that various aspects of the disclosure content may also individually constitute a complete technical solution. The following embodiments and features in the embodiments may be combined with one another without conflicts.

In the embodiments of the present disclosure, "at least one" refers to one or more, and "a plurality of" refers to two or more. In order to clearly describe the technical solutions of the embodiments of the present disclosure, in the embodiments of the present disclosure, words such as "first" and "second" are used to distinguish same items or similar items having basically the same functions and effects. A person skilled in the art could understand that the words such as "first" and "second" do not limit the quantity and the execution order, are merely used for illustrating and distinguishing description objects, have no sequence distinction, and do not represent particular definition to the number of devices in the embodiments of the present disclosure, and cannot constitute any limitation to the embodiments of the present disclosure.

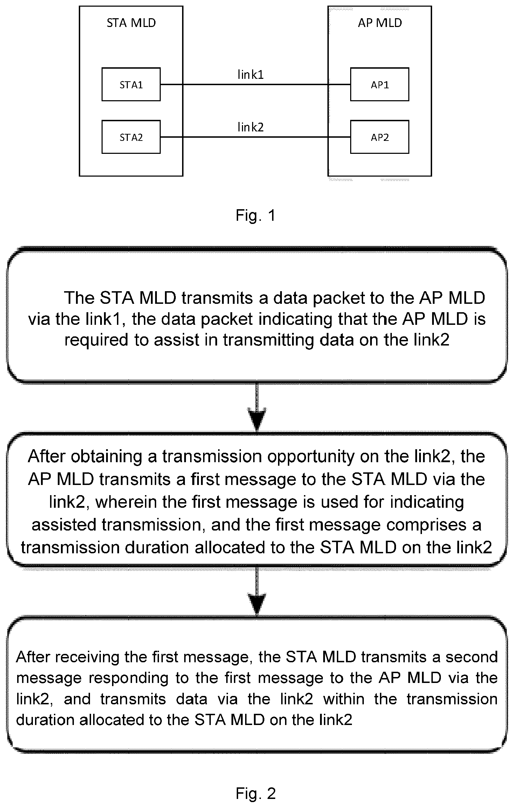

In the embodiments of the present disclosure, it is assumed that in two connected multi-link devices, one multi-link device is a terminal and the other multi-link device is an access point, and the two multi-link devices each have two logic entities. As shown in Fig. 1, a communication system comprises a multi-link terminal STA MLD and a multi-link access point AP MLD. In embodiments of the present disclosure, the STA MLD may be connected to the AP MLD in a wireless manner, that is, the STA MLD may communicate with the AP MLD over a wireless network. In the embodiments of the present disclosure, it is assumed that the multi-link terminal STA MLD has two logic terminals STA1 and STA2, and the multi-link access point AP MLD has two logic access points AP1 and AP2, wherein STA1 and AP1 are connected and operate on a link1, and STA2 and AP2 are connected and operate on a link2. For the STA MLD, the link1 and link2 belong to an NSTR link set; and for the AP MLD, the link1 and link2 belong to an STR link set.

It should be understood that Fig. 1 is only a schematic diagram of an architecture of a communication system. The STA MLD and the AP MLD may comprise more logic entities, and the number of logic entities in the two may be different. In addition, the AP MLD in the embodiments of the present disclosure may also be replaced with a multi-link terminal, which is not limited in the embodiments of the present disclosure. A person skilled in the art would understand that, in accordance with the principles and functions described herein, the term "|access point (AP)" according to some embodiments of the present disclosure may also be used to describe an access port or any other devices capable of receiving and transmitting wireless signals within a network architecture, and thus the use of access point is merely exemplary.

In the communication system as shown in Fig. 1, in the embodiments of the present disclosure, it is assumed that the STA MLD transmits data to the AP MLD via the link1, and the STA MLD does not transmit data to the AP MLD via the link2, that is, the STA1 transmits data to the AP1, and the STA2 does not transmit data. When the STA2 needs to transmit data to the AP2, the STA MLD can request the AP MLD to assist same in transmitting data on the link2. As shown in Fig. 2, a method for controlling a multi-link device to transmit data comprises the following content:
201, the STA MLD transmitting a data packet to the AP MLD via the link1, the data packet indicating that the AP MLD is required to assist in transmitting data on the link2. Exemplarily, the data packet transmitted by the STA1 to the AP1 comprises the following control information:
   Assisted AP Link: indicating a link that needs to perform assisted transmission, which is set to be the link2 in the present embodiment.
202, after obtaining a transmission opportunity on the link2, the AP MLD transmitting a first message to the STA MLD via the link2, wherein the first message is used for indicating assisted transmission, and the first message comprises a transmission duration allocated to the STA MLD on the link2.

Specifically, after the logic access point AP1 of the AP MLD receives the data packet transmitted by the STA1, in a case that the data packet contains Assisted AP Link, then according to a link indicated by the value of the Assisted AP Link, i.e. link2, after obtaining a transmission opportunity on the link2, the logic access point AP2 operated by the AP MLD on the link2 transmits a first message to the STA2.

Exemplarily, the first message is a trigger message (trigger frame message), the trigger message comprises a trigger type, and the trigger type is set as assisted transmission. It should be understood that the first message may also be message of other types, as long as the message can indicate assisted transmission, which is not limited in the embodiments of the present disclosure.

Optionally, the first message may also comprise an indication of a mode of assisted transmission, which instructs the STA MLD to transmit data according to the mode of assisted transmission indicated in the first message. The mode of assisted transmission comprises the following two modes: within the allocated transmission duration, data can only be transmitted to a second multi-link device; and within the allocated transmission duration, data can be transmitted to the second multi-link device or other devices.

Optionally, the first message can further comprise information of a device receiving the first message, and the information of the device receiving the first message comprises an identifier of the STA MLD, for example, a connection identifier allocated by the AP MLD for the STA MLD, and an address of the STA MLD.

In one specific example, it is assumed that the first message is a trigger message, the trigger message may comprise the following parameters:
Trigger type: a trigger type, for example, the trigger type is set as AP assisted TX, which indicates that the trigger type is assisted transmission.
User info: information of a device receiving the trigger message, comprising a connection identifier allocated by the AP MLD for the STA MLD.
Assisted TX mode: an assisted transmission mode, which may be set as the following values: Exclusive: in this mode, the STA MLD can transmit data only to the AP MLD within the allocated duration; and Flexible: in this mode, the STA MLD can transmit data to the AP MLD or other devices (such as other terminals connected to the STA MLD) within the allocated duration; and
Duration: a transmission duration allocated by the AP MLD to the STA MLD on the link2.

203, after receiving the first message, the STA MLD transmitting a second message responding to the first message to the AP MLD via the link2, and transmitting data via the link2 within the transmission duration allocated to the STA MLD on the link2.

Specifically, after receiving the first message, the STA2 transmits a second message (e.g. a CTS message) responding to the first message to the AP2, and transmits data within the transmission duration allocated to the STA MLD on the link2 in the first message. Exemplarily, the transmission duration allocated to the STA MLD on the link2 starts upon successful receiving of the first message.

For example, after the STA2 receives the trigger message in the specific example, in a case that the connection identifier indicated in the User info is the connection identifier allocated by the AP MLD for the STA MLD, and the trigger type indicates AP assisted TX, then a CTS message is transmitted to the AP2; after transmitting the CTS message, the STA2 transmits a data packet in a duration indicated by Duration, and in a case that the Assisted TX mode in the received trigger message indicates Exclusive, then the data packet can only be transmitted to the AP2 in the duration indicated by Duration; and in a case that the Assisted TX mode in the received trigger message indicates Flexible, the data packet can be transmitted to the AP2 or the data packet can be transmitted to other terminals within the duration indicated by Duration.

Optionally, after the AP2 receives the CTS transmitted by the STA2, in a case that the Assisted TX mode in the previously-transmitted trigger message is set as Exclusive, then within the transmission duration allocated to the STA MLD on the link2, after transmitting an instant response message or after receiving the data packet transmitted by the STA2 but instant response is not required, in a case that it is detected that the link is idle, the AP2 can further transmit a data packet to the STA2 or other terminals; and in a case that the Assisted TX mode in the previously-transmitted trigger message is set as Flexible, the AP2 can only transmit an instant response message within the transmission duration allocated to the STA MLD on the link2 (in cases where transmitting of an instant response message is required after receiving a data packet).

In some embodiments, before transmitting the first message to the STA MLD, the AP MLD also requests the STA MLD for the size of data requiring to be transmitted thereby via the link2, such that the AP MLD can set, according to the size of the data, the transmission duration allocated to the STA MLD on the link2, which specifically comprises:
1001, the AP MLD transmitting a fourth message to the STA MLD via the link2, wherein the fourth message is used for requesting the size of data requiring to be transmitted by the STA MLD on the link2, for example, the AP2 transmits a trigger message requesting the size of data to the STA2.
1002, after receiving the fourth message, the STA MLD transmitting a fifth message responding to the fourth message to the AP MLD via the link2, the fifth message comprising the size of data requiring to be transmitted by the STA MLD on the link2.
1003, after receiving the fifth message, the AP MLD setting a transmission duration allocated to the STA MLD on the link2 according to the size of data requiring to be transmitted by the STA MLD on the link2 contained in the fifth message.

It should be noted that the AP MLD may also transmit a message to the STA MLD on the link1, the message requesting the size of data requiring to be transmitted by the STA MLD on the link2, as long as the message indicates the size of data requiring to be transmitted by the STA MLD on the link2.

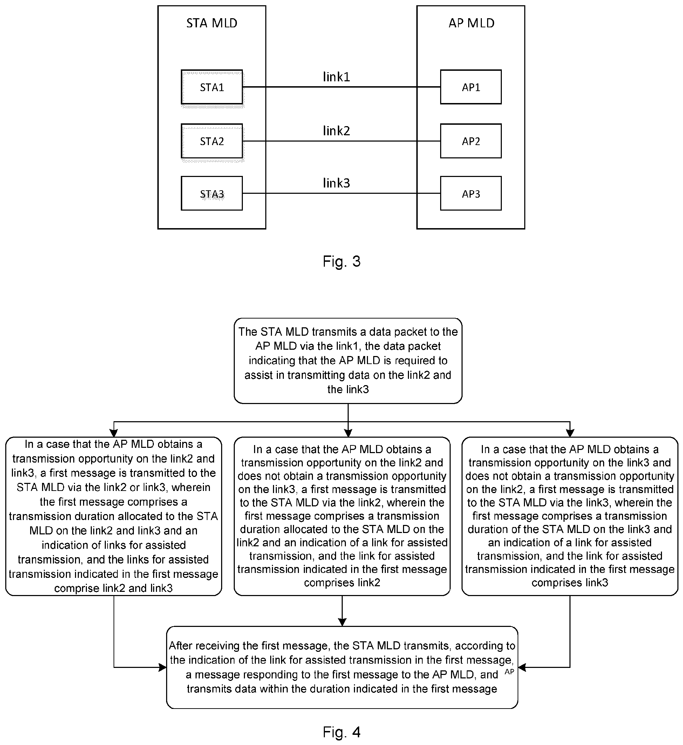

Fig. 3 is a schematic diagram of an architecture of another communication system provided according to embodiments of the present disclosure. As shown in Fig. 3, a multi-link terminal STA MLD is connected to a multi-link access point AP MLD. The STA MLD has three logic terminals STA1, STA2 and STA3; and the AP MLD has three logic access points AP1, AP2 and AP3; wherein the STA1 is connected to the AP1 on a link1, the STA2 is connected to the AP2 on a link2, and the STA3 is connected to the AP3 on a link3. Furthermore, for the STA MLD, link1, link2 and link3 belong to an NSTR link set; and for the AP MLD, link1, link2 and link3 belong to an STR link set.

In the communication system as shown in Fig. 3, in the embodiments of the present disclosure, it is assumed that the STA MLD transmits data to the AP MLD via the link1, and the STA MLD does not transmit data to the AP MLD via the link2 and the link3. That is, the STA1 transmits data to the AP1, and the STA2 and STA3 do not transmit data. When the STA2 needs to transmit data to the AP2 and the STA3 needs to transmit data to the AP3, the STA MLD can request the AP MLD to assist same in transmitting data on the link2 and link3. Fig. 4 is a flowchart of a method for controlling a multi-link device to transmit data corresponding to the communication system shown in Fig. 3 provided according to embodiments of the present disclosure. As shown in Fig. 4, the method for controlling a multi-link device to transmit data comprises the following content:
401, the STA MLD transmitting a data packet to the AP MLD via the link1, the data packet indicating that the AP MLD is required to assist in transmitting data on the link2 and the link3. Exemplarily, the data packet transmitted by the STA1 to the AP1 comprises the following control information:
   Assisted AP Link: indicating links that need to perform assisted transmission, which are set to be the link2 and link3 in the present embodiment.
402, after the logic access point AP1 of the AP MLD receives the data packet transmitted by the STA1, in a case that the data packet contains Assisted AP Link, then according to links indicated by the value of the Assisted AP Link, i.e. link2 and link3, assisting in scheduling transmission of the STA MLD on the link2 and link3.
   1) In a case that the AP MLD obtains a transmission opportunity on the link2 and link3, a first message is transmitted to the STA MLD via the link2 or link3, wherein the first message comprises a transmission duration allocated to the STA MLD on the link2 and link3 and an indication of links for assisted transmission, and the links for assisted transmission indicated in the first message comprise link2 and link3.

Specifically, in a case that the logic access point AP2 operated by the AP MLD on the link2 obtains a transmission opportunity on the link2, and the logic access point AP3 operated by the AP MLD on the link3 obtains a transmission opportunity on the link 3, for example, in a case that the transmission opportunity obtained by the AP2 on the link2 and the transmission opportunity obtained by the AP3 on the link3 both end, a first message is transmitted to the STA2 on the link2, or the first message is transmitted to the STA3 on the link3.

Exemplarily, the first message is a trigger message (trigger frame message), the trigger message comprises a trigger type, and the trigger type is set as assisted transmission. It should be understood that the first message may also be message of other types, as long as the message can indicate assisted transmission, which is not limited in the embodiments of the present disclosure.

Optionally, the first message may also comprise an indication of a mode of assisted transmission, which instructs the STA MLD to transmit data according to the mode of assisted transmission indicated in the first message. The mode of assisted transmission comprises the following two modes: within the allocated transmission duration, data can only be transmitted to a second multi-link device; and within the allocated transmission duration, data can be transmitted to the second multi-link device or other devices.

Optionally, the first message can further comprise information of a device receiving the first message, and the information of the device receiving the first message comprises an identifier of the STA MLD, for example, a connection identifier allocated by the AP MLD for the STA MLD, and an address of the STA MLD.

In one specific example, it is assumed that the first message is a trigger message, the trigger message may comprise the following parameters:
Trigger type: a trigger type, for example, the trigger type is set as AP assisted TX, which indicates that the trigger type is assisted transmission.
User info: information of a device receiving the trigger message, comprising a connection identifier allocated by the AP MLD for the STA MLD.
Assisted TX mode: an assisted transmission mode, which may be set as the following values: Exclusive: in this mode, the STA MLD can transmit data only to the AP MLD within the allocated duration; and Flexible: in this mode, the STA MLD can transmit data to the AP MLD or other devices (such as other terminals connected to the STA MLD) within the allocated duration; and
Duration: the transmission duration allocated by the AP MLD to the STA MLD on the link2 and link3. It should be noted that the same parameter may be used to indicate the transmission durations allocated to the STA MLD on the link2 and link3; and in this case, the transmission durations allocated to the STA MLD on the link2 and the link3 are the same. Two parameters may also be used to indicate the transmission durations allocated to the STA MLD on the link2 and the link3 respectively; and in this case, the transmission durations allocated to the STA MLD on the link2 and link3 may be the same or different. In a case that the transmission durations are different, the transmission durations allocated to the STA MLD on the link2 and the link3 indicate that the STA MLD simultaneously stops transmitting on the link2 and the link3.

Assisted AP Link: indicating links for assisted transmission, which are set to be the link2 and link3 in the present embodiment.

In a case that the AP MLD obtains a transmission opportunity on the link2 and does not obtain a transmission opportunity on the link3, a first message is transmitted to the STA MLD via the link2, wherein the first message comprises a transmission duration allocated to the STA MLD on the link2 and an indication of a link for assisted transmission, and the link for assisted transmission indicated in the first message comprises link2.

Specifically, in a case that the logic access point AP2 operated by the AP MLD on the link2 obtains a transmission opportunity on the link2, and the logic access point AP3 operated by the AP MLD on the link3 does not obtain a transmission opportunity on the link 3, the first message is transmitted to the STA2 on the link2.

In one specific example, it is assumed that the first message is a trigger message, the trigger message may comprise the following parameters:
Trigger type: a trigger type, for example, the trigger type is set as AP assisted TX, which indicates that the trigger type is assisted transmission.
User info: information of a device receiving the trigger message, comprising a connection identifier allocated by the AP MLD for the STA MLD.
Assisted TX mode: an assisted transmission mode, which may be set as the following values: Exclusive: in this mode, the STA MLD can transmit data only to the AP MLD within the allocated duration; and Flexible: in this mode, the STA MLD can transmit data to the AP MLD or other devices (such as other terminals connected to the STA MLD) within the allocated duration; and
Duration: a transmission duration allocated by the AP MLD to the STA MLD on the link2.

Assisted AP Link: indicating a link for assisted transmission, which is set to be the link2 in the present embodiment.

3) In a case that the AP MLD obtains a transmission opportunity on the link3 and does not obtain a transmission opportunity on the link2, a first message is transmitted to the STA MLD via the link3, wherein the first message comprises a transmission duration of the STA MLD on the link3 and an indication of a link for assisted transmission, and the link for assisted transmission indicated in the first message comprises link3.

Specifically, in a case that the logic access point AP3 operated by the AP MLD on the link3 obtains a transmission opportunity on the link3, but the logic access point AP2 operated by the AP MLD on the link2 does not obtain a transmission opportunity on the link 2, the first message is transmitted to the STA3 on the link3.

In one specific example, it is assumed that the first message is a trigger message, the trigger message may comprise the following parameters:
Trigger type: a trigger type, for example, the trigger type is set as AP assisted TX, which indicates that the trigger type is assisted transmission.
User info: information of a device receiving the trigger message, comprising a connection identifier allocated by the AP MLD for the STA MLD.
Assisted TX mode: an assisted transmission mode, which may be set as the following values: Exclusive: in this mode, the STA MLD can transmit data only to the AP MLD within the allocated duration; and Flexible: in this mode, the STA MLD can transmit data to the AP MLD or other devices (such as other terminals connected to the STA MLD) within the allocated duration; and
Duration: a transmission duration allocated by the AP MLD to the STA MLD on the link3.
Assisted AP Link: indicating a link for assisted transmission, which is set to be the link3 in the present embodiment.

403, after receiving the first message, the STA MLD transmitting, according to the indication of the link for assisted transmission in the first message, a message responding to the first message to the AP MLD, and transmitting data within the duration indicated in the first message.

Specifically, after receiving the first message, in a case that the links indicating assisted transmission in the first message comprise link2 and link3, the STA MLD transmits a second message responding to the first message to the AP MLD via the link2, and transmits a third message responding to the first message to the AP MLD via the link3, then transmits data via the link2 in a transmission duration allocated to the STA MLD on the link2, and transmits data via the link3 in a transmission duration allocated to the STA MLD on the link3; in a case that the link indicating assisted transmission in the first message only comprises link2, the STA MLD transmits a second message responding to the first message to the AP MLD only via the link2, and then transmits data via the link2 in the transmission duration allocated to the STA MLD on the link2; and in a case that the link indicating assisted transmission in the first message only comprises link3, the STA MLD transmits a third message responding to the first message to the AP MLD only via the link3, and then transmits data via the link3 in the transmission duration allocated to the STA MLD on the link3.

Exemplarily, after receiving the trigger message in the specific example, in a case that the connection identifier indicated in the User info is the connection identifier allocated by the AP MLD for the STA MLD, and the trigger type indicates AP assisted TX, then the STA MLD transmits a CTS message to the AP MLD according to the value of the parameter Assisted AP Link, and transmits data within the duration indicated by Duration, specifically comprising:
(1) In a case that the value of the parameter Assisted AP Link in the message is link2, then the STA2 transmits a CTS message to the AP2; after transmitting the CTS message, the STA2 transmits a data packet in a duration indicated by Duration, and in a case that the Assisted TX mode in the received trigger message indicates Exclusive, then the data packet can only be transmitted to the AP2 in the duration indicated by Duration; and in a case that the Assisted TX mode in the received trigger message indicates Flexible, the data packet can be transmitted to the AP2 or the data packet can be transmitted to other terminals within the duration indicated by Duration.
(2) In a case that the value of the parameter Assisted AP Link in the message is link3, then the STA3 transmits a CTS message to the AP3; after transmitting the CTS message, the STA3 transmits a data packet in a duration indicated by Duration, and in a case that the Assisted TX mode in the received trigger message indicates Exclusive, then the data packet can only be transmitted to the AP3 in the duration indicated by Duration; and in a case that the Assisted TX mode in the received trigger message indicates Flexible, the data packet can be transmitted to the AP3 or the data packet can be transmitted to other terminals within the duration indicated by Duration.
(3) In a case that the values of the parameter Assisted AP Link in the message are link2 and link3, then the STA2 transmits a CTS message to the AP2, and the STA3 transmits a CTS message to the AP3; after transmitting the CTS messages, the STA2 and STA3 transmit data packets within durations indicated by Duration, in a case that the Assisted TX mode in the received trigger message indicates Exclusive, the STA2 can only transmit a data packet to the AP2 within a duration indicated by Duration, and the STA3 can only transmit a data packet to the AP3 within a duration indicated by Duration; and in a case that the Assisted TX mode in the received trigger message indicates Flexible, the STA2 may transmit a data packet to the AP2 or transmit a data packet to other terminals within a duration indicated by Duration, and the STA3 may transmit a data packet to the AP3 or transmit a data packet to other terminals within a duration indicated by Duration.

Regarding operations performed by the AP2 and AP3 after receiving the CTS messages transmitted by the STA2 and STA3 respectively, reference can be made to the embodiments as shown in Figs. 1 and 2, which will not be described in detail herein again.

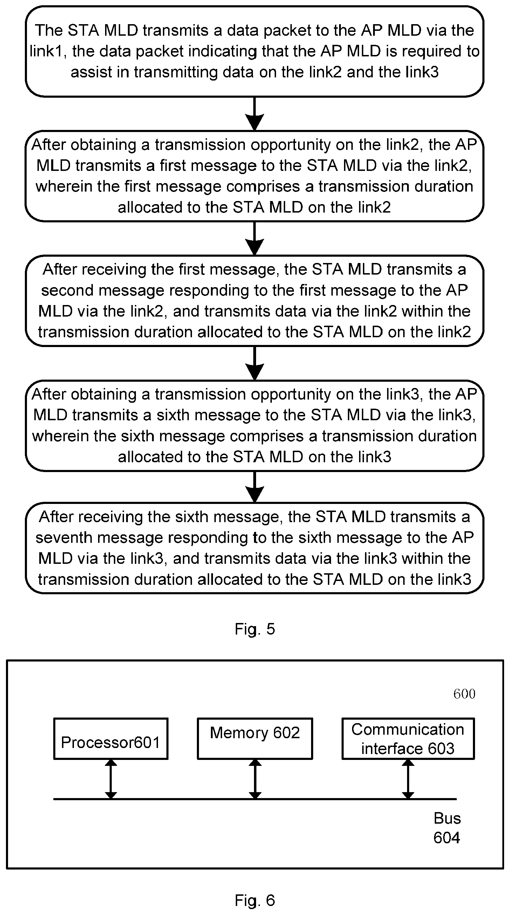

Fig. 5 is a flowchart of another method for controlling a multi-link device to transmit data corresponding to the communication system shown in Fig. 3 provided according to embodiments of the present disclosure. As shown in Fig. 5, the method for controlling a multi-link device to transmit data comprises the following content:
501, the STA MLD transmitting a data packet to the AP MLD via the link1, the data packet indicating that the AP MLD is required to assist in transmitting data on the link2 and the link3. Exemplarily, the data packet transmitted by the STA1 to the AP1 comprises the following control information:
   Assisted AP Link: indicating links that need to perform assisted transmission, which are set to be the link2 and link3 in the present embodiment.
502, After obtaining a transmission opportunity on the link2, the AP MLD transmitting a first message to the STA MLD via the link2, wherein the first message comprises a transmission duration allocated to the STA MLD on the link2. That is, in a case that the logic access point AP2 operated by the AP MLD on the link2 obtains a transmission opportunity on the link2, the first message is transmitted to the STA2 on the link2.

In one specific example, it is assumed that the first message is a trigger message, the trigger message may comprise the following parameters:
Trigger type: a trigger type, for example, the trigger type is set as AP assisted TX, which indicates that the trigger type is assisted transmission.
User info: information of a device receiving the trigger message, comprising a connection identifier allocated by the AP MLD for the STA MLD.
Assisted TX mode: an assisted transmission mode, which may be set as the following values: Exclusive: in this mode, the STA MLD can transmit data only to the AP MLD within the allocated duration; and Flexible: in this mode, the STA MLD can transmit data to the AP MLD or other devices (such as other terminals connected to the STA MLD) within the allocated duration; and
Duration: a transmission duration allocated by the AP MLD to the STA MLD on the link2.

In some embodiments, before transmitting the first message to the STA MLD, the AP MLD also requests the STA MLD for the size of data requiring to be transmitted thereby via the link2, such that the AP MLD can set, according to the size of the data, the transmission duration allocated to the STA MLD on the link2, which specifically comprises:
5201, the AP MLD transmitting a fourth message to the STA MLD via the link2, wherein the fourth message is used for requesting the size of data requiring to be transmitted by the STA MLD on the link2, for example, the AP2 transmits a trigger message requesting the size of data to the STA2.
5202, after receiving the fourth message, the STA MLD transmitting a fifth message responding to the fourth message to the AP MLD via the link2, the fifth message comprising the size of data requiring to be transmitted by the STA MLD on the link2.
5203, after receiving the fifth message, the AP MLD setting a transmission duration allocated to the STA MLD on the link2 according to the size of data requiring to be transmitted by the STA MLD on the link2 contained in the fifth message.
503, after receiving the first message, the STA MLD transmitting a second message responding to the first message to the AP MLD via the link2, and transmitting data via the link2 within the transmission duration allocated to the STA MLD on the link2. That is, after receiving the first message, the STA2 transmits a second message (e.g. a CTS message) responding to the first message to the AP2, and transmits data within the transmission duration allocated to the STA MLD on the link2 in the first message.

For example, after the STA2 receives the trigger message in the specific example, in a case that the connection identifier indicated in the User info is the connection identifier allocated by the AP MLD for the STA MLD, and the trigger type indicates AP assisted TX, then a CTS message is transmitted to the AP2; after transmitting the CTS message, the STA2 transmits a data packet in a duration indicated by Duration, and in a case that the Assisted TX mode in the received trigger message indicates Exclusive, then the data packet can only be transmitted to the AP2 in the duration indicated by Duration; and in a case that the Assisted TX mode in the received trigger message indicates Flexible, the data packet can be transmitted to the AP2 or the data packet can be transmitted to other terminals within the duration indicated by Duration.

504, after obtaining a transmission opportunity on the link3, the AP MLD transmitting a sixth message to the STA MLD via the link3, wherein the sixth message comprises a transmission duration allocated to the STA MLD on the link3. That is, in a case that the logic access point AP3 operated by the AP MLD on the link3 obtains a transmission opportunity on the link3, the first message is transmitted to the STA3 on the link3.

In one specific example, it is assumed that the sixth message is a trigger message, the trigger message may comprise the following parameters:
Trigger type: a trigger type, for example, the trigger type is set as AP assisted TX, which indicates that the trigger type is assisted transmission.
User info: information of a device receiving the trigger message, comprising a connection identifier allocated by the AP MLD for the STA MLD.
Assisted TX mode: an assisted transmission mode, which may be set as the following values: Exclusive: in this mode, the STA MLD can transmit data only to the AP MLD within the allocated duration; and Flexible: in this mode, the STA MLD can transmit data to the AP MLD or other devices (such as other terminals connected to the STA MLD) within the allocated duration; and
Duration: a transmission duration allocated by the AP MLD to the STA MLD on the link3. It should be noted that the transmission duration allocated to the STA MLD on the link2 and the transmission duration allocated to the STA MLD on the link3 at least need to ensure that the STA MLD simultaneously stops transmitting on the link2 and link3.

In some embodiments, before transmitting the sixth message to the STA MLD, the AP MLD also requests the STA MLD for the size of data requiring to be transmitted thereby via the link3, such that the AP MLD can set, according to the size of the data, the transmission duration allocated to the STA MLD on the link3, which specifically comprises:
5401, the AP MLD transmitting a fourth message to the STA MLD via the link3, wherein the fourth message is used for requesting the size of data requiring to be transmitted by the STA MLD on the link3, for example, the AP3 transmits a trigger message requesting the size of data to the STA3.
5402, after receiving the fourth message, the STA MLD transmitting a fifth message responding to the fourth message to the AP MLD via the link3, the fifth message comprising the size of data requiring to be transmitted by the STA MLD on the link3.
5403, after receiving the fifth message, the AP MLD setting a transmission duration allocated to the STA MLD on the link3 according to the size of data requiring to be transmitted by the STA MLD on the link3 contained in the fifth message.
505, after receiving the sixth message, the STA MLD transmitting a seventh message responding to the sixth message to the AP MLD via the link3, and transmitting data via the link3 within the transmission duration allocated to the STA MLD on the link3. That is, after receiving the sixth message, the STA3 transmits a seventh message (e.g. a CTS message) responding to the sixth message to the AP3, and transmits data within the transmission duration allocated to the STA MLD on the link3 in the sixth message.

For example, after the STA3 receives the trigger message in the specific example, in a case that the connection identifier indicated in the User info is the connection identifier allocated by the AP MLD for the STA MLD, and the trigger type indicates AP assisted TX, then a CTS message is transmitted to the AP3; after transmitting the CTS message, the STA3 transmits a data packet in a duration indicated by Duration, and in a case that the Assisted TX mode in the received trigger message indicates Exclusive, then the data packet can only be transmitted to the AP3 in the duration indicated by Duration; and in a case that the Assisted TX mode in the received trigger message indicates Flexible, the data packet can be transmitted to the AP3 or the data packet can be transmitted to other terminals within the duration indicated by Duration.

Embodiments of the present disclosure further provide an apparatus for controlling a multi-link device to transmit data, which is applied to a first multi-link device, the first multi-link device being connected to a second multi-link device at least via a first link and a second link, wherein for the first multi-link device, the first link and the second link belong to an NSTR link set, and for the second multi-link device, the first link and the second link belong to an STR link set, and the apparatus comprises: an assisted-transmission requesting component, the assisted-transmission requesting component being configured to execute the following steps:
transmitting a data packet to the second multi-link device via the first link, the data packet indicating that the second multi-link device is required to assist in transmitting data on the second link;
receiving a first message transmitted by the second multi-link device via the second link, wherein the first message is used for indicating assisted transmission, and the first message comprises a transmission duration allocated to the first multi-link device on the second link;
transmitting a second message responding to the first message to the second multi-link device via the second link; and
transmitting data via the second link within the transmission duration allocated to the first multi-link device on the second link.

Embodiments of the present disclosure further provide an apparatus for controlling a multi-link device to transmit data, which is applied to a second multi-link device, the second multi-link device being connected to a first multi-link device at least via a first link and a second link, wherein for the first multi-link device, the first link and the second link belong to an NSTR link set, and for the second multi-link device, the first link and the second link belong to an STR link set, and the apparatus comprises: an assisted-transmission component, the assisted-transmission component being configured to execute the following steps:
receiving a data packet transmitted by the first multi-link device via the first link, the data packet indicating that the second multi-link device is required to assist in transmitting data on the second link;
in a case that a transmission opportunity is obtained on the second link, transmitting a first message to the first multi-link device via the second link, wherein the first message is used for indicating assisted transmission, and the first message comprises a transmission duration allocated to the first multi-link device on the second link; and
receiving a second message which responds to the first message and is transmitted by the first multi-link device via the second link.

It should be understood that the apparatuses herein are embodied in the form of functional components. The term "component" herein may refer to an application specific integrated circuit (ASIC), an electronic circuit, a processor (such as a shared processor, a proprietary processor, or a group processor) for executing one or more software or firmware programs, a memory, a merged logic circuit, and/or other suitable components that support the functions as described. The apparatuses have functions for implementing corresponding steps in the methods; and the functions may be implemented by hardware or by hardware executing corresponding software. The hardware or software comprises one or more components corresponding to the functions described above. In the embodiments of the present disclosure, the apparatuses may also be a chip or a chip system, for example, a system on chip (SoC). They are not limited in some embodiments of the present disclosure.

Embodiments of the present disclosure further provide an electronic device. Fig. 6 is a schematic structural diagram of an electronic device provided according to embodiments of the present disclosure. As shown in Fig. 6, a device 600 comprises a processor 601, a memory 602 and a communication interface 603, wherein the processor 601, the memory 602 and the communication interface 603 communicate with each other via a bus 604, the memory 602 stores instructions that can be executed by the processor 601, and the instructions are loaded and executed by the processor 601 so as to control the communication interface 603 to transmit a signal and/or receive a signal.

It should be understood that the device 600 may specifically be the STA MLD or the AP MLD in the described embodiments, or functions of the STA MLD or the AP MLD in the described embodiments may be integrated in the device 600, and the device 600 may be configured to execute steps and/or processes corresponding to the STA MLD or the AP MLD in the described embodiments. Optionally, the memory 602 may comprise a read-only memory and a random access memory, and provide instructions and data to the processor 601. A part of the memory 602 may also comprise a non-volatile random access memory. For example, the memory 602 may also store information of device types. The processor 601 may be configured to execute the instructions stored in the memory 601, and when the processor 601 executes the instructions, the processor 601 may execute corresponding steps and/or processes in the described method embodiments.

It should be understood that in the embodiments of the present disclosure, the processor may be a central processing unit (CPU), and the processor may also be other general-purpose processors, a digital signal processor (DSP), an application specific integrated circuit (ASIC), a field programmable gate array (FPGA) or other programmable logic device, a discrete gate or transistor logic device, a discrete hardware component, or the like. The general-purpose processor may be a microprocessor, or the processor may also be any conventional processor, etc.

In an implementation process, the steps of the methods may be completed by an integrated logic circuit of hardware in a processor or instructions in the form of software. Steps of the methods disclosed in the embodiments of the present disclosure may be directly embodied as being completed by a hardware processor, or being completed by execution by a combination of hardware and software components in the processor. The software component may be located in a mature storage medium in the art, such as a random access memory, a flash memory, a read-only memory, a programmable read-only memory, or an electrically erasable programmable memory, and a register. The storage medium is located in the memory, and the processor executes instructions in the memory and completes the steps of the methods in combination with hardware of the processor. To avoid repetition, the details will not be described herein again.

The embodiments described above may be all or partially implemented by software, hardware, firmware, or any combination thereof. When implemented by using software, the embodiments described above may be all or partially implemented in the form of a computer program product. The computer program product comprises one or more computer instructions or computer programs. When the computer instructions or the computer programs are loaded or executed on a computer, processes or functions according to the embodiments of the present disclosure are all or partially generated. The computer may be a general-purpose computer, a special-purpose computer, a computer network, or other programmable apparatuses. The computer instructions may be stored in a computer-readable storage medium, or transferred from one computer-readable storage medium to another computer-readable storage medium. For example, the computer instructions may be transferred from one website, computer, server, or data center to another website, computer, server, or data center in a wired (for example, infrared, wireless, microwave, or the like) manner. The computer-readable storage medium may be any available medium that can be accessed by a computer, or a data storage device such as a server or a data center that comprises one or more available media sets. The available medium may be a magnetic medium (e.g. floppy disk, hard disk, magnetic tape), an optical medium (e.g. DVD), or a semiconductor medium. The semiconductor medium may be a solid state disk.

It should be understood that in various embodiments of the present disclosure, the size of the serial number of the processes above does not imply the sequence of execution, and the sequence of execution of the processes should be determined according to functions and internal logics thereof, which should not constitute any limitation to implementation processes of the embodiments of the present disclosure. Components described as separate components may or may not be physically separate, and components displayed as components may or may not be physical components, that is, may be located in one place, or may be distributed to a plurality of network components, and some or all of the components therein may be selected according to actual needs to achieve the object of the solutions of the embodiments of the present disclosure.

In the several embodiments provided in the present disclosure, it should be understood that the disclosed devices, apparatuses and methods may be implemented in other manners. For example, the apparatus embodiments as described above are merely exemplary. For example, the division of the components is merely division of logic functions, and there may be other division manners in actual implementation. For example, one component or component may be divided into a plurality of components or components, or a plurality of components or components may be combined or integrated into another system, or some features may be ignored or not executed. In addition, the displayed or discussed mutual coupling or direct coupling or communication connection may be achieved via some interfaces. The indirect couplings or communication connections between the apparatuses or components may be achieved in electronic, mechanical, or other forms.

A person of ordinary skill in the art would have been aware that components and algorithm steps in examples described in combination with the embodiments disclosed herein can be implemented by electronic hardware, or a combination of computer software and electronic hardware. Whether these functions are executed by hardware or software depends on specific applications and design constraint conditions of the technical solutions. A person skilled in the art could use different methods to implement the described functions for each particular application, but the implementation shall not be considered to go beyond the scope of some embodiments of the present disclosure.

The content as described above merely relates to specific embodiments of the present disclosure, and the scope of protection of the present disclosure is not limited thereto. A person skilled in the art would have readily conceived of variations or replacements within the technical scope disclosed in the present disclosure, and the variations or replacements shall all fall within the scope of protection of the present disclosure. Thus, the scope of protection of the present disclosure shall be subject to the scope of protection of the claims.

## Claims

1. A method for controlling a multi-link device to transmit data, which is applied to a first multi-link device, the first multi-link device being connected to a second multi-link device at least via a first link and a second link, wherein for the first multi-link device, the first link and the second link belong to a non-simultaneous transmitting and receiving (NSTR) link set, and for the second multi-link device, the first link and the second link belong to a simultaneous transmitting and receiving (STR) link set, wherein the method comprises:
transmitting a data packet to the second multi-link device via the first link, the data packet indicating that the second multi-link device is required to assist in transmitting data on the second link;
receiving a first message transmitted by the second multi-link device via the second link, wherein the first message is used for indicating assisted transmission, and the first message comprises a transmission duration allocated to the first multi-link device on the second link;
transmitting a second message responding to the first message to the second multi-link device via the second link; and
transmitting data via the second link within the transmission duration allocated to the first multi-link device on the second link.

2. The method for controlling a multi-link device to transmit data as claimed in claim 1, wherein the first message further comprises an indication of a mode of assisted transmission, wherein the mode of assisted transmission comprises the following two modes: within the allocated transmission duration, data can only be transmitted to the second multi-link device; and within the allocated transmission duration, data can be transmitted to the second multi-link device or other devices;
transmitting data via the second link within the transmission duration allocated to the first multi-link device on the second link comprises:
in a case that the first message indicates that data can only be transmitted to the second multi-link device within the allocated transmission duration, transmitting data to the second multi-link device via the second link within the transmission duration allocated to the first multi-link device on the second link; and
in a case that the first message indicates that data can be transmitted to the second multi-link device or other devices within the allocated transmission duration, transmitting data to the second multi-link device or other devices via the second link within the transmission duration allocated to the first multi-link device on the second link.

3. The method for controlling a multi-link device to transmit data as claimed in claim 1, wherein the first message further comprises information of a device receiving the first message; and only when the information of the device receiving the first message comprises an identifier of the first multi-link device, a second message responding to the first message is transmitted to the second multi-link device via the second link.

4. The method for controlling a multi-link device to transmit data as claimed in any one of claims 1-3, wherein the first message further comprises an indication of a link for assisted transmission, and the link for assisted transmission indicated in the first message comprises the second link;
wherein the data packet also indicates that the second multi-link device is required to assist in transmitting data on a third link, a link for indicating assisted transmission in the first message also comprises the third link, the first message further comprises a transmission duration allocated to the first multi-link device on the third link, and the transmission duration allocated to the first multi-link device on the third link is the same as the transmission duration allocated to the first multi-link device on the second link; or the transmission duration allocated to the first multi-link device on the third link and the transmission duration allocated to the first multi-link device on the second link indicate that the first multi-link device simultaneously stops transmitting on the third link and the second link, and the third link is a link except the first link and the second link between the first multi-link device and the second multi-link device; wherein for the first multi-link device, the first link, the second link and the third link belong to an NSTR link set, and for the second multi-link device, the first link, the second link and the third link belong to an STR link set, and the method further comprises:
transmitting a third message responding to the first message to the second multi-link device via the third link; and
transmitting data via the third link within the transmission duration allocated to the first multi-link device on the third link.

5. The method for controlling a multi-link device to transmit data as claimed in claim 4, wherein transmitting data via the third link within the transmission duration allocated to the first multi-link device on the third link comprises:
in a case that the first message indicates that data can only be transmitted to the second multi-link device within the allocated transmission duration, transmitting data to the second multi-link device via the third link within the transmission duration allocated to the first multi-link device on the third link; and
in a case that the first message indicates that data can be transmitted to the second multi-link device or other devices within the allocated transmission duration, transmitting data to the second multi-link device or other devices via the third link within the transmission duration allocated to the first multi-link device on the third link.

6. The method for controlling a multi-link device to transmit data as claimed in claim 1, wherein before receiving the first message transmitted by the second multi-link device via the second link, the method further comprises:
receiving a fourth message transmitted by the second multi-link device via the second link, wherein the fourth message is used for requesting the size of data requiring to be transmitted by the first multi-link device on the second link; and
transmitting a fifth message responding to the fourth message to the second multi-link device via the second link, wherein the fifth message comprises the size of data requiring to be transmitted by the first multi-link device on the second link, and instructing the second multi-link device to set, according to the size of the data requiring to be transmitted by the first multi-link device on the second link in the fifth message, a transmission duration allocated to the first multi-link device on the second link.

7. A method for controlling a multi-link device to transmit data, which is applied to a second multi-link device, the second multi-link device being connected to a first multi-link device at least via a first link and a second link, wherein for the first multi-link device, the first link and the second link belong to a non-simultaneous transmitting and receiving (NSTR) link set, and for the second multi-link device, the first link and the second link belong to an simultaneous transmitting and receiving (STR) link set, wherein the method comprises:
receiving a data packet transmitted by the first multi-link device via the first link, the data packet indicating that the second multi-link device is required to assist in transmitting data on the second link;
in a case that a transmission opportunity is obtained on the second link, transmitting a first message to the first multi-link device via the second link, wherein the first message is used for indicating assisted transmission, and the first message comprises a transmission duration allocated to the first multi-link device on the second link, such that the first multi-link device transmits data via the second link within the transmission duration allocated to the first multi-link device on the second link; and
receiving a second message which responds to the first message and is transmitted by the first multi-link device via the second link.

8. The method for controlling a multi-link device to transmit data as claimed in claim 7, wherein the first message further comprises an indication of a mode of assisted transmission, wherein the mode of assisted transmission comprises the following two modes: within the allocated transmission duration, data can only be transmitted to the second multi-link device; and within the allocated transmission duration, data can be transmitted to the second multi-link device or other devices.

9. The method for controlling a multi-link device to transmit data as claimed in claim 8, wherein after receiving a second message which responds to the first message and is transmitted by the first multi-link device via the second link, the method further comprises:
in a case that the mode of assisted transmission indicated in the first message is that within the allocated transmission duration, data can only be transmitted to the second multi-link device, then within the transmission duration allocated to the first multi-link device on the second link, after an instant response message is transmitted via the second link or the data transmitted by the first multi-link device via the second link is received but instant response is not required, in a case that it is detected that the second link is idle, transmitting data to the first multi-link device or other devices via the second link; and
in a case that the mode of assisted transmission indicated in the first message is that within the allocated transmission duration, data can be transmitted to the second multi-link device or other devices, then only transmitting an instant response message to the first multi-link device via the second link within the transmission duration allocated to the first multi-link device on the second link.

10. The method for controlling a multi-link device to transmit data as claimed in claim 7, wherein the first message further comprises information of a device receiving the first message, and the information of the device receiving the first message comprises an identifier of the first multi-link device.

11. The method for controlling a multi-link device to transmit data as claimed in any one of claims 7-10, wherein the first message further comprises an indication of a link for assisted transmission, and the link for assisted transmission indicated in the first message comprises the second link;
wherein the data packet also indicates that the second multi-link device is required to assist in transmitting data on a third link, and in a case that a transmission opportunity is obtained on the third link, a link for indicating assisted transmission in the first message also comprises the third link, the first message further comprises a transmission duration allocated to the first multi-link device on the third link, and the transmission duration allocated to the first multi-link device on the third link is the same as the transmission duration allocated to the first multi-link device on the second link; or the two transmission durations indicate that the first multi-link device simultaneously stops transmitting on the third link and the second link, the third link is a link except the first link and the second link between the first multi-link device and the second multi-link device; wherein for the first multi-link device, the first link, the second link and the third link belong to an NSTR link set, and for the second multi-link device, the first link, the second link and the third link belong to an STR link set, and the method further comprises:
receiving a third message which responds to the first message and is transmitted by the first multi-link device via the third link.

12. The method for controlling a multi-link device to transmit data as claimed in claim 11, wherein after receiving a third message which responds to the first message and is transmitted by the first multi-link device via the third link, the method further comprises:
in a case that the mode of assisted transmission indicated in the first message is that within the allocated transmission duration, data can only be transmitted to the second multi-link device, then within the transmission duration allocated to the first multi-link device on the third link, after an instant response message is transmitted via the third link or the data transmitted by the first multi-link device via the third link is received but instant response is not required, in a case that it is detected that the third link is idle, transmitting data to the first multi-link device or other devices via the third link; and
in a case that the mode of assisted transmission indicated in the first message is that within the allocated transmission duration, data can be transmitted to the second multi-link device or other devices, then only transmitting an instant response message to the first multi-link device via the third link within the transmission duration allocated to the first multi-link device on the third link.

13. The method for controlling a multi-link device to transmit data as claimed in claim 7, wherein before transmitting a first message to the first multi-link device via the second link, the method further comprises:
transmitting a fourth message to the first multi-link device via the second link, wherein the fourth message is used for requesting the size of data requiring to be transmitted by the first multi-link device on the second link;
receiving a fifth message which responds to the fourth message and is transmitted by the first multi-link device via the second link, wherein the fifth message comprises the size of data requiring to be transmitted by the first multi-link device on the second link; and
setting, according to the size of the data requiring to be transmitted by the first multi-link device on the second link in the fifth message, a transmission duration allocated to the first multi-link device on the second link.

14. An apparatus for controlling a multi-link device to transmit data, which is applied to a first multi-link device, the first multi-link device being connected to a second multi-link device at least via a first link and a second link, wherein for the first multi-link device, the first link and the second link belong to a non-simultaneous transmitting and receiving (NSTR) link set, and for the second multi-link device, the first link and the second link belong to a simultaneous transmitting and receiving (STR) link set, wherein the apparatus comprises: an assisted-transmission requesting component, the assisted-transmission requesting component being configured to execute the following steps:
transmitting a data packet to the second multi-link device via the first link, the data packet indicating that the second multi-link device is required to assist in transmitting data on the second link;
receiving a first message transmitted by the second multi-link device via the second link, wherein the first message is used for indicating assisted transmission, and the first message comprises a transmission duration allocated to the first multi-link device on the second link;
transmitting a second message responding to the first message to the second multi-link device via the second link; and
transmitting data via the second link within the transmission duration allocated to the first multi-link device on the second link.

15. An apparatus for controlling a multi-link device to transmit data, which is applied to a second multi-link device, the second multi-link device being connected to a first multi-link device at least via a first link and a second link, wherein for the first multi-link device, the first link and the second link belong to an NSTR link set, and for the second multi-link device, the first link and the second link belong to an STR link set, wherein the apparatus comprises: an assisted-transmission module, the assisted-transmission module being configured to execute the following steps:
receiving a data packet transmitted by the first multi-link device via the first link, the data packet indicating that the second multi-link device is required to assist in transmitting data on the second link;
in a case that a transmission opportunity is obtained on the second link, transmitting a first message to the first multi-link device via the second link, wherein the first message is used for indicating assisted transmission, and the first message comprises a transmission duration allocated to the first multi-link device on the second link, so that the first multi-link device transmits data via the second link within the transmission duration allocated to the first multi-link device on the second link; and
receiving a second message which responds to the first message and is transmitted by the first multi-link device via the second link.

16. An electronic device, comprising a memory, a processor, and a computer program stored on the memory, wherein the processor executes the computer program to implement the method as claimed in any one of claims 1-13.

17. A computer-readable storage medium, on which a computer program is stored, wherein when the computer program is executed by a processor, the method as claimed in any one of claims 1-13 is implemented.

## Amended claims

### Amended claims in accordance with Rule 137(2) EPC.

1. A method for controlling a multi-link device to transmit data, which is applied to a first multi-link device, the first multi-link device being connected to a second multi-link device at least via a first link and a second link, wherein for the first multi-link device, the first link and the second link belong to a non-simultaneous transmitting and receiving (NSTR) link set, and for the second multi-link device, the first link and the second link belong to a simultaneous transmitting and receiving (STR) link set, wherein the method comprises:
transmitting a data packet to the second multi-link device via the first link, the data packet indicating that the second multi-link device is required to assist in transmitting data on the second link;
receiving a first message transmitted by the second multi-link device via the second link, wherein the first message is used for indicating assisted transmission, and the first message comprises a transmission duration allocated to the first multi-link device on the second link;
transmitting a second message responding to the first message to the second multi-link device via the second link; and
transmitting data via the second link within the transmission duration allocated to the first multi-link device on the second link;
in a case that the first message indicates that data is transmitted to other devices within an allocated transmission duration, transmitting data to the other devices within the transmission duration allocated to the first multi-link device on the second link, the other devices are devices connected to the first multi-link device.

2. The method for controlling a multi-link device to transmit data as claimed in claim 1, wherein the first message further comprises an indication of a mode of assisted transmission, wherein the mode of assisted transmission comprises the following two modes: within the allocated transmission duration, data can only be transmitted to the second multi-link device; and within the allocated transmission duration, data can be transmitted to the second multi-link device or the other devices;
transmitting data via the second link within the transmission duration allocated to the first multi-link device on the second link comprises:
in a case that the first message indicates that data can only be transmitted to the second multi-link device within the allocated transmission duration, transmitting data to the second multi-link device via the second link within the transmission duration allocated to the first multi-link device on the second link; and
in a case that the first message indicates that data can be transmitted to the second multi-link device within the allocated transmission duration, transmitting data to the second multi-link device via the second link within the transmission duration allocated to the first multi-link device on the second link.

3. The method for controlling a multi-link device to transmit data as claimed in claim 1, wherein the first message further comprises information of a device receiving the first message; and only when the information of the device receiving the first message comprises an identifier of the first multi-link device, a second message responding to the first message is transmitted to the second multi-link device via the second link.

4. The method for controlling a multi-link device to transmit data as claimed in any one of claims 1-3, wherein the first message further comprises an indication of a link for assisted transmission, and the link for assisted transmission indicated in the first message comprises the second link;
wherein the data packet also indicates that the second multi-link device is required to assist in transmitting data on a third link, a link for indicating assisted transmission in the first message also comprises the third link, the first message further comprises a transmission duration allocated to the first multi-link device on the third link, and the transmission duration allocated to the first multi-link device on the third link is the same as the transmission duration allocated to the first multi-link device on the second link; or the transmission duration allocated to the first multi-link device on the third link and the transmission duration allocated to the first multi-link device on the second link indicate that the first multi-link device simultaneously stops transmitting on the third link and the second link, and the third link is a link except the first link and the second link between the first multi-link device and the second multi-link device; wherein for the first multi-link device, the first link, the second link and the third link belong to an NSTR link set, and for the second multi-link device, the first link, the second link and the third link belong to an STR link set, and the method further comprises:
transmitting a third message responding to the first message to the second multi-link device via the third link; and
transmitting data via the third link within the transmission duration allocated to the first multi-link device on the third link.

5. The method for controlling a multi-link device to transmit data as claimed in claim 4, wherein transmitting data via the third link within the transmission duration allocated to the first multi-link device on the third link comprises:
in a case that the first message indicates that data can only be transmitted to the second multi-link device within the allocated transmission duration, transmitting data to the second multi-link device via the third link within the transmission duration allocated to the first multi-link device on the third link; and
in a case that the first message indicates that data can be transmitted to the second multi-link device or other devices within the allocated transmission duration, transmitting data to the second multi-link device via the third link or transmitting data to the other devices within the transmission duration allocated to the first multi-link device on the third link, the other devices are devices connected to the first multi-link device.

6. The method for controlling a multi-link device to transmit data as claimed in claim 1, wherein before receiving the first message transmitted by the second multi-link device via the second link, the method further comprises:
receiving a fourth message transmitted by the second multi-link device via the second link, wherein the fourth message is used for requesting the size of data requiring to be transmitted by the first multi-link device on the second link; and
transmitting a fifth message responding to the fourth message to the second multi-link device via the second link, wherein the fifth message comprises the size of data requiring to be transmitted by the first multi-link device on the second link, and instructing the second multi-link device to set, according to the size of the data requiring to be transmitted by the first multi-link device on the second link in the fifth message, a transmission duration allocated to the first multi-link device on the second link.

7. A method for controlling a multi-link device to transmit data, which is applied to a second multi-link device, the second multi-link device being connected to a first multi-link device at least via a first link and a second link, wherein for the first multi-link device, the first link and the second link belong to a non-simultaneous transmitting and receiving (NSTR) link set, and for the second multi-link device, the first link and the second link belong to an simultaneous transmitting and receiving (STR) link set, wherein the method comprises:
receiving a data packet transmitted by the first multi-link device via the first link, the data packet indicating that the second multi-link device is required to assist in transmitting data on the second link;
in a case that a transmission opportunity is obtained on the second link, transmitting a first message to the first multi-link device via the second link, wherein the first message is used for indicating assisted transmission, and the first message comprises a transmission duration allocated to the first multi-link device on the second link, such that the first multi-link device transmits data via the second link within the transmission duration allocated to the first multi-link device on the second link; and
receiving a second message which responds to the first message and is transmitted by the first multi-link device via the second link;
in a case that the first message indicates that data is transmitted to other devices within a allocated transmission duration, the second message is that transmitting data to the other devices within the transmission duration allocated to the first multi-link device on the second link the other devices are devices connected to the first multi-link device.

8. The method for controlling a multi-link device to transmit data as claimed in claim 7, wherein the first message further comprises an indication of a mode of assisted transmission, wherein the mode of assisted transmission comprises the following two modes: within the allocated transmission duration, data can only be transmitted to the second multi-link device; and within the allocated transmission duration, data can be transmitted to the second multi-link device or other devices.

9. The method for controlling a multi-link device to transmit data as claimed in claim 8, wherein after receiving a second message which responds to the first message and is transmitted by the first multi-link device via the second link, the method further comprises:
in a case that the mode of assisted transmission indicated in the first message is that within the allocated transmission duration, data can only be transmitted to the second multi-link device, then within the transmission duration allocated to the first multi-link device on the second link, after an instant response message is transmitted via the second link or the data transmitted by the first multi-link device via the second link is received but instant response is not required the instant response message is a message that responds to received messages within a predetermined time frame, in a case that it is detected that the second link is idle, transmitting data to the first multi-link device via the second link or transmitting data to the other devices, the other devices are devices connected to the first multi-link device; and
in a case that the mode of assisted transmission indicated in the first message is that within the allocated transmission duration, data can be transmitted to the second multi-link device or other devices, then only transmitting an instant response message to the first multi-link device via the second link within the transmission duration allocated to the first multi-link device on the second link.

10. The method for controlling a multi-link device to transmit data as claimed in claim 7, wherein the first message further comprises information of a device receiving the first message, and the information of the device receiving the first message comprises an identifier of the first multi-link device.

11. The method for controlling a multi-link device to transmit data as claimed in any one of claims 7-10, wherein the first message further comprises an indication of a link for assisted transmission, and the link for assisted transmission indicated in the first message comprises the second link;
wherein the data packet also indicates that the second multi-link device is required to assist in transmitting data on a third link, and in a case that a transmission opportunity is obtained on the third link, a link for indicating assisted transmission in the first message also comprises the third link, the first message further comprises a transmission duration allocated to the first multi-link device on the third link, and the transmission duration allocated to the first multi-link device on the third link is the same as the transmission duration allocated to the first multi-link device on the second link; or the two transmission durations indicate that the first multi-link device simultaneously stops transmitting on the third link and the second link, the third link is a link except the first link and the second link between the first multi-link device and the second multi-link device; wherein for the first multi-link device, the first link, the second link and the third link belong to an NSTR link set, and for the second multi-link device, the first link, the second link and the third link belong to an STR link set, and the method further comprises:
receiving a third message which responds to the first message and is transmitted by the first multi-link device via the third link.

12. The method for controlling a multi-link device to transmit data as claimed in claim 11, wherein after receiving a third message which responds to the first message and is transmitted by the first multi-link device via the third link, the method further comprises:
in a case that the mode of assisted transmission indicated in the first message is that within the allocated transmission duration, data can only be transmitted to the second multi-link device, then within the transmission duration allocated to the first multi-link device on the third link, after an instant response message is transmitted via the third link or the data transmitted by the first multi-link device via the third link is received but instant response is not required the instant response message is a message that responds to received messages within a predetermined time frame, in a case that it is detected that the third link is idle, transmitting data to the first multi-link device via the third link or transmitting data to other devices, the other devices are devices connected to the first multi-link device; and
in a case that the mode of assisted transmission indicated in the first message is that within the allocated transmission duration, data can be transmitted to the second multi-link device or other devices, then only transmitting an instant response message to the first multi-link device via the third link within the transmission duration allocated to the first multi-link device on the third link.

13. The method for controlling a multi-link device to transmit data as claimed in claim 7, wherein before transmitting a first message to the first multi-link device via the second link, the method further comprises:
transmitting a fourth message to the first multi-link device via the second link, wherein the fourth message is used for requesting the size of data requiring to be transmitted by the first multi-link device on the second link;
receiving a fifth message which responds to the fourth message and is transmitted by the first multi-link device via the second link, wherein the fifth message comprises the size of data requiring to be transmitted by the first multi-link device on the second link; and
setting, according to the size of the data requiring to be transmitted by the first multi-link device on the second link in the fifth message, a transmission duration allocated to the first multi-link device on the second link.

14. An apparatus for controlling a multi-link device to transmit data, which is applied to a first multi-link device, the first multi-link device being connected to a second multi-link device at least via a first link and a second link, wherein for the first multi-link device, the first link and the second link belong to a non-simultaneous transmitting and receiving (NSTR) link set, and for the second multi-link device, the first link and the second link belong to a simultaneous transmitting and receiving (STR) link set, wherein the apparatus comprises: an assisted-transmission requesting component, the assisted-transmission requesting component being configured to execute the following steps:
transmitting a data packet to the second multi-link device via the first link, the data packet indicating that the second multi-link device is required to assist in transmitting data on the second link;
receiving a first message transmitted by the second multi-link device via the second link, wherein the first message is used for indicating assisted transmission, and the first message comprises a transmission duration allocated to the first multi-link device on the second link;
transmitting a second message responding to the first message to the second multi-link device via the second link; and
transmitting data via the second link within the transmission duration allocated to the first multi-link device on the second link;
in a case that the first message indicates that data is transmitted to other devices within a allocated transmission duration, transmitting data to the other devices within the transmission duration allocated to the first multi-link device on the second link the other devices are devices connected to the first multi-link device.

15. An apparatus for controlling a multi-link device to transmit data, which is applied to a second multi-link device, the second multi-link device being connected to a first multi-link device at least via a first link and a second link, wherein for the first multi-link device, the first link and the second link belong to an NSTR link set, and for the second multi-link device, the first link and the second link belong to an STR link set, wherein the apparatus comprises: an assisted-transmission module, the assisted-transmission module being configured to execute the following steps:
receiving a data packet transmitted by the first multi-link device via the first link, the data packet indicating that the second multi-link device is required to assist in transmitting data on the second link;
in a case that a transmission opportunity is obtained on the second link, transmitting a first message to the first multi-link device via the second link, wherein the first message is used for indicating assisted transmission, and the first message comprises a transmission duration allocated to the first multi-link device on the second link, so that the first multi-link device transmits data via the second link within the transmission duration allocated to the first multi-link device on the second link; and
receiving a second message which responds to the first message and is transmitted by the first multi-link device via the second link;
in a case that the first message indicates that data is transmitted to other devices within a allocated transmission duration, the second message is that transmitting data to the other devices within the transmission duration allocated to the first multi-link device on the second link the other devices are devices connected to the first multi-link device.

16. A computer-readable storage medium, on which a computer program is stored, wherein when the computer program is executed by a processor, the method as claimed in any one of claims 1-13 is implemented.
